# EUROPEAN PATENT APPLICATION

(11) **EP 1 933 138 A1**
(43) Date of publication of application: **18.06.2008**
(21) Application number: 06126094.9
(22) Date of filing: 14.12.2006
(51) Int. Cl.: G01N 33/543, C12Q 1/68, G01N 27/00

(54) **Biological assay substrate and method and device for producing such substrate**

(71) Applicant: Koninklijke Philips Electronics N.V., 5621 BA Eindhoven (NL)
(72) Inventor: The designation of the inventor has not yet been filed
(74) Representative: van Wermeskerken, Stephanie Christine

(57) **Abstract**

The invention provides a biological assay substrate suitable for detecting at least one analyte in at least one sample fluid. The substrate comprises one or more capture probes able to each specifically bind at least one target analyte, and further comprises verification means which can detect the state of at least part of the capture probes. The invention also relates to a method and device for producing the biological assay substrate, and to a method for examining analyte fluids using the substrate.

## Description

### FIELD OF THE INVENTION

The present invention relates to the field of analysing biological sample fluids with respect to certain analytes and in particular to a biological assay substrate suitable for detecting at least one analyte in a biological sample fluid. In particular, the present invention permits an accurate and efficient analysis of biological sample fluids. The invention further relates to a method for producing a biological assay substrate by depositing a plurality of substances onto the substrate, and to a biological assay substrate obtainable by the method. The present invention also relates to a method for analysing a sample fluid with respect to one or more analyte molecules present in the sample fluid. The analyte may comprise any compound capable of binding to capture probes on the substrate, including target biological compounds, proteins, DNA, and so on. The method can be used for molecular diagnostic tests, e.g. for measuring the presence of infectious disease pathogens and resistance genes.

### BACKGROUND OF THE INVENTION

Arrays of capture probes on a substrate are used in biological assays, for instance to examine analyte biological fluids, such as human blood or tissue samples, for the presence and/or concentration of certain bacteria, viruses and/or fungi. The capture probes have a selective binding capacity for a predetermined indicative factor, such as a protein, DNA or RNA sequence. In the microarray technique, a set of specific capture probes, each of which being chosen in order to interact specifically (e.g. hybridize in the case of a DNA microarray) with one particular target biological compound, are immobilized at specific locations of a biosensor solid substrate, for instance by printing. Suitable probes may comprise bio-fluids containing the specific indicative factor, for instance a solution of a specific DNA sequence and/or antibody. After the substrate has been provided with the capture probes, for instance by printing them on the substrate using an ink jet device, the analyte fluid is forced to flow through the substrate, or is forced to flow over the substrate. In order to be able to visualize the presence of an indicative factor in the analyte fluid, molecules of the analyte fluid may for instance be provided with fluorescent and/or magnetic labelling. In case of an ELISA (enzyme-linked immunosorbent assay) an enzyme is attached to the second antibody, instead of a radiolabel. An intensely colored or fluorescent compound is then formed by the catalytic action of this enzyme. The (labelled) molecules of the analyte fluid adhere to those capture probes of the substrate that have binding capacity for the molecule considered. This results in a detectable fluorescence on the spot the specific factor adheres to, at least when using fluorescent labelling. The captured molecules are typically read by illumination with a light source, and the fluorescent pattern recorded with the aid of a CCD camera for instance. The recorded pattern is a characteristic of the presence of a bacterium or a set of bacteria. By providing capture probes with different specificity for different factors, the array may be used to assay for various different factors at the same time. Using such arrays enables high-throughput screening of analyte fluids for a large amount of factors in a single run.

When binding of the molecules is insufficient (or hybridization in case of DNA strands), certain indicative factors may be missed and/or the fluorescent pattern may not be clearly distinguishable and/or may be deficient in some other sense. This of course is undesirable. Insufficiency may occur due to irregularities in the printing process, for instance when capture probes have not been printed at the correct positions or even worse have not been printed at all. It is therefore of great importance to improve reliability of printing, i.e. to better guarantee that during ink-jet printing the capture probe droplets land on the correct position on the substrate and/or that the capture probe droplets are generated at all. Several measures have been proposed in the art to ensure this, for instance cameras and stroboscopes have been used to monitor capture probe printing and position on the substrate. Although this is a viable solution there is a need for a biological assay substrate as well as for a method for producing such biological assay substrate which is simpler and yet more reliable.

### SUMMARY OF THE INVENTION

It is an object of the present invention to provide a biological assay substrate, including substrates for PCR and/or electrophoresis, with improved reliability. It is a further object of the present invention to provide a method for producing such substrate by depositing a plurality of substances onto said substrate. It is a further object of the present invention to provide a device for producing such a substrate which is able to deposit a plurality of substances onto said substrate. Another object of the present invention is to provide a method for examining analyte fluids, such as human blood or tissue samples, for the presence of certain bacteria, viruses and/or fungi, the method yielding an improved analysis.

The above objectives are accomplished by a biological assay substrate suitable for detecting at least one analyte in at least one sample fluid, the substrate comprising one or more capture probes able to each specifically bind at least one target analyte, wherein the biological assay substrate further comprises verification means which can detect the state of at least part of the capture probes. Broadly speaking, by providing a substrate having incorporated therein verification means to verify whether capture probes have been printed correctly on the substrate, a much simpler and yet more accurate solution is provided than known hitherto for ensuring reliable biological analysis using biological assay substrates. Another advantage of the invention is that inkjet devices for producing the biological assay substrates do not need to be equipped with peripheral equipment, such as cameras and stroboscopes.

In the context of this application the terminology "state of the capture probes" should be interpreted to include a plurality of intrinsic properties, such as their volume, mass, temperature, density, viscosity, composition, presence of air bubbles therein, but also extrinsic properties, such as the position at which they land on the substrate during printing. According to the invention, the verification means incorporated in the substrate are able to generate a signal which is indicative of some property of the capture probes, and is measured by a suitable parameter or parameters. If changes do occur in the state of a capture probe or printing process in general, the measured parameter(s) will also change. Discrimination between correct and incorrect functioning of the ink jet device, and accordingly of the printing process, now becomes possible, for instance by assigning limit values to the measured parameter. The limit value demarcates correct from incorrect operation.

In a preferred embodiment of the biological assay substrate according to the invention, the verification means are able to detect the absence or presence of at least part of the capture probes onto the substrate. Another preferred embodiment of the biological assay substrate is characterized in that the verification means are able to detect the position on the substrate of at least part of the capture probes. It is important to assure that capture probes are actually printed on specific positions onto the substrate. This is especially important when using the substrate for a biological test assay of the so-called competitive, inhibitive or displacement type. In such an assay, analyte (or a compound containing the analyte) is immobilized on the sensor substrate surface. Free analyte present in the biological test fluid will then compete with immobilized analyte in trying to bind to the labelled antibody. When the biological test fluid does not contain target molecules a large amount of antibodies will bind to the sensor surface, thereby producing a signal of high intensity. When the biological test fluid does contain target molecules less (or no) antibodies will bind to the sensor surface and the signal is low. In case of such a competitive assay, the unintended absence of a capture probe droplet on the substrate would lead to a false positive, since a biologically active layer is lacking at that position. No binding occurs, leading to a signal of low (or zero) intensity. This is erroneously interpreted as a high concentration of target molecules in the fluid.

Another preferred biological assay substrate according to the invention is characterized in that the verification means comprise a fluid sensor integrated in an electrical circuit, as well as interaction means for transmitting the fluid sensor signal to signal processing means, whereby the fluid sensor is able to interact with a capture probe. Such fluid sensors are known per se but not in connection with a substrate for a biological test array. The fluid sensor is located at such position that it can interact with a specific capture probe. This position preferably coincides with the intended position for landing of said capture probe onto the substrate. When a capture probe correctly hits the intended position, this will be registered by the fluid sensor, which will generate a signal accordingly. Preferably the fluid sensor detects the change in impedance and/or capacitance of the electrical circuit, although many other possibilities are available to the person skilled in the art. When a capture probe does not correctly hit the intended position, this also will be registered by the fluid sensor, for instance by not generating a signal, or by generating another signal.

The verification means of the substrate, preferably comprising a fluid sensor, may interact, for instance may exchange electrical signals, with the environment in all ways known to the art. In a preferred embodiment the biological assay substrate is characterized in that the interaction means comprise an electrical connection. During printing of capture probes onto the substrate, the integrated circuit containing the fluid sensor(s) must be powered. Furthermore, the read-out signal from the fluid sensor(s) must preferably be made available to the control electronics of the printer, or at least provide the operator of the printer with a warning when capture probe droplet generation is disturbed or when the printing position of a particular capture probe droplet deviates from its intended position. The supply of electrical power and signal read-out is in this embodiment ensured by electrically contacting the fluid sensor during the print process. This can for instance be achieved by providing the tray holding the substrates during the printing process with electronic contacts.

In another particularly preferred embodiment the biological assay substrate comprises interaction means in the form of a RF transmitter with RF antenna, and signal processing means in the form of RF read-out means. The verification means circuit is in this wireless embodiment powered by an external RF field and preferably read-out through this same RF-field. The RF electronics of the substrate transmit the sensor signal to the signal processing means, which preferably comprises printer control means. This embodiment has the additional advantage that problems with electrical contacts (dirt, wear, etc.) do not occur. Furthermore, only one RF read-out device is sufficient, and may for instance be positioned beneath the printable substrate. In contrast therewith, the wired solution needs electrical contacts for each position in the tray.

A particularly preferred biological assay substrate further comprises multiplexing means in order to be able to detect signals originating from the verification means as well as to detect at least one analyte in a sample fluid. Even more preferred is a biological assay substrate comprising interaction means in the form of a RF transmitter with RF antenna, and signal processing means in the form of RF read-out means, and which further comprises multiplexing means in order to be able to detect signals originating from the verification means as well as to detect at least one analyte in a sample fluid. The RF-read out circuitry and antenna may in this preferred embodiment also be used to transmit the actual biosensor signal during actual use of the sensor in a completed biological assay cartridge. Internal multiplexing of fluidic and biological sensors at the input of the RF circuit is a suitable approach to achieve this.

According to the invention, a method for producing such biological assay substrate is also provided. In the method a plurality of capture probes are released onto the substrate, whereby the state of at least part of the capture probes is verified by verification means, present in the substrate. In a preferred method the signals originating from the verification means are read by reading means, which read-out is subsequently used to control the release of a plurality of capture probes onto the substrate. The advantages of the method have already been explained in the context of the biological assay substrate and therefore will not be repeated here.

The invention further provides a device, and in particular an ink jet device for producing such biological assay substrate. The ink jet device according to the invention comprises reading means to read signals originating from verification means, which verification means are incorporated in the substrate to be printed, and are able to detect the state of at least part of the capture probes. A preferred ink jet device further comprises control means for regulating the release of a plurality of capture probes onto the substrate on the basis of the reading of the signals originating from the verification means.

Other preferred embodiments of the ink jet printer include a device, wherein the verification means comprise a fluid sensor integrated in an electrical circuit, as well as interaction means for transmitting the fluid sensor signal to the signal processing means, whereby the fluid sensor is able to interact with a capture probe, and whereby the signal processing means comprise the printer control means. Still another preferred embodiment includes an ink jet device, wherein the interaction means comprise an electrical connection, more preferably a RF transmitter and antenna, and the signal processing means comprise RF read-out means.

The present invention also provides a method for examining analyte fluids, such as human blood or tissue samples, for the presence of certain bacteria, viruses and/or fungi. In the method the analyte fluid is forced through or flows over a substrate according to the present invention. Flow-through is possible when the substrate material is porous. The binding of the target biological compound is the result of the free and/or forced flow of the sample fluid through or over the surface of the biological assay substrate, i.e. either from the lower surface to the upper surface or vice versa, and/or by a lateral flow from a first position to another position on the substrate. To increase the chances for binding, flow-through or flow-over may be repeated several times.

As used herein, and unless stated otherwise, the term « microarray assay » designates an assay wherein a sample fluid, preferably a biological fluid sample (optionally containing minor amounts of solid or colloid particles suspended therein), suspected to contain target biological compounds is contacting (i.e. flowing over or flowing through) a biosensor solid substrate containing a multiplicity of discrete and isolated regions across a surface thereof, each of said regions having one or more probes applied thereto and each of said probes being chosen for its ability to bind specifically with a target biological compound. Notably, not every fluid deposited on the substrate needs to be a probe, i.e. has the ability to bind a specific analyte. The assay may also comprise other fluids, such as fluids used for calibration purposes, gridding markers, and so on. Such fluids may already comprise a label.

As used herein, and unless stated otherwise, the term « analyte » or « target biological compound» designates a biological molecular compound fixed as a goal or point of analysis. It includes biological molecular compounds such as, but not limited to, nucleic acids and related compounds (e.g. DNAs, RNAs, oligonucleotides or analogs thereof, PCR products, genomic DNA, bacterial artificial chromosomes, plasmids and the like), proteins and related compounds (e.g. polypeptides, peptides, monoclonal or polyclonal antibodies, soluble or bound receptors, transcription factors, and the like), antigens, ligands, haptens, carbohydrates and related compounds (e.g. polysaccharides, oligosaccharides and the like), cellular fragments such as membrane fragments, cellular organelles, intact cells, bacteria, viruses, protozoa, and the like.

As used herein, and unless stated otherwise, the term « capture probe » designates a biological agent being capable to bind specifically with a « target biological compound» or « analyte » when put in the presence of or reacted with said target biological compound, and used in order to detect the presence of said target biological compound. Probes include biological molecular compounds such as, but not limited to, nucleic acids and related compounds (e.g. DNAs, RNAs, oligonucleotides or analogs thereof, PCR products, genomic DNA, bacterial artificial chromosomes, plasmids and the like), proteins and related compounds (e.g. polypeptides, monoclonal antibodies, receptors, transcription factors, and the like), antigens, ligands, haptens, carbohydrates and related compounds (e.g. polysaccharides, oligosaccharides and the like), cellular organelles, intact cells, and the like. Probes may also include specific materials such as certain biopolymers to which target compounds bind.

As used herein, and unless stated otherwise, the term « label » designates a biological or chemical agent having at least one physical property (such as, but not limited to, radioactivity, optical property, magnetic property) detectable by suitable means so as to enable the determination of its spatial position and/or the intensity of the detectable physical property such as, but not limited to, luminescent molecules (e.g. fluorescent agents, phosphorescent agents, chemiluminescent agents, electroluminescent agents, bioluminescent agents and the like), colored molecules, molecules producing colors upon reaction, enzymes, magnetic beads, radioisotopes, specifically bindable ligands, microbubbles detectable by sonic resonance and the like.

These and other aspects of the present invention will be apparent from and elucidated with reference to the embodiment(s) described hereinafter, taken in conjunction with the accompanying drawings, which illustrate, by way of example, the principles of the invention.

### BRIEF DESCRIPTION OF THE DRAWINGS

In the figures:
Fig. 1 illustrates schematically a biological test array obtainable by printing capture probes onto as substrate according to the present invention;
Fig. 2 illustrates schematically a cross-section of part of a biological assay device provided with a substrate according to the present invention;
Fig. 3 illustrates schematically a cross-section of part of a biological assay device provided with another embodiment of a substrate according to the present invention; and
Fig. 4 illustrates schematically a top view of still another embodiment of a substrate according to the invention.

### DETAILED DESCRIPTION OF EMBODIMENTS

The present invention will be described with respect to particular embodiments and with reference to certain drawings but the invention is not limited thereto but only by the claims. Any reference signs in the claims shall not be construed as limiting the scope. The drawings described are only schematic and are non-limiting. In the drawings, the size of some of the elements may be exaggerated and not drawn to scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

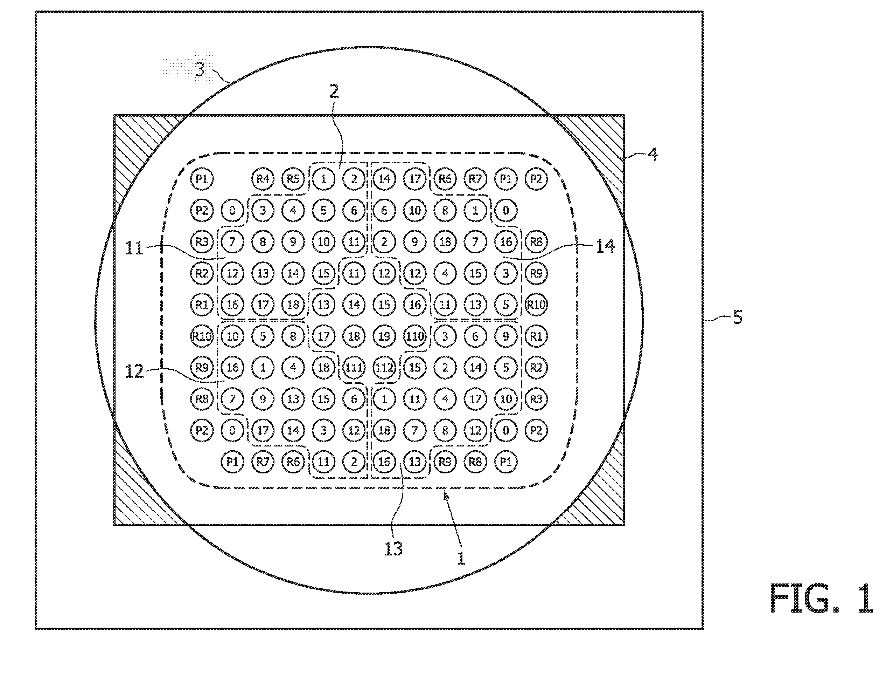

Figure 1 shows a biological test array (1) obtained by depositing, preferably by ink jet printing, a plurality of capture probe spots (2) on a substrate (3), such as a membrane or sensor surface. According to the method of the invention, substrate (3) comprises verification means which can detect the state of at least part of the capture probes, more in particular their absence or presence on the substrate, and/or their position on the substrate. In the example shown, the test array (1) is covered with a pattern of 128 spots (2) comprising 43 different bio-fluids, printed in a predefined pattern. The spots (2) are numbered, and each number represents a unique gene sequence or contains reference material. Note that the gene sequences occur in multiple duplicates in the array (1) on multiple mutually distant locations. The substrate (3) is fitted onto a supporting structure or tray (4) and placed in a cartridge (5). The analyte fluid is analysed for the presence of certain bacteria, viruses and/or fungi, by forcing it through the porous substrate or over the sensor surface. The free and/or forced flow of the sample fluid through or over the surface of the biological assay substrate, i.e. either from the lower surface to the upper surface or vice versa and/or by a lateral flow from a first position to another position on the substrate brings the analyte fluid in contact with the capture probes, which allows binding of the target biological compound to these capture probes able to bind with it. More in particular, the sample fluid (such as a PCR product) containing the different gene sequences characteristic for the DNA of different bacteria is brought into contact with the substrate (3) comprising the array of spots (2). Different DNA types (gene sequences) adhere to the different printed capture probes. In the embodiment shown in figure 1, different spots are visualised. The numbers 1 to 18 represent 9 different pathogens and 9 corresponding resistances. For reliability of the measurement, the same bio selective capture material may be printed in four different quadrants (11, 12, 13, 14) of membrane (3). In each of the quadrants (11, 12, 13, 14), spots of the same number have different neighbouring spots, preventing that less intense spots (2) are not detected because of overexposure from adjacent spots (2). Intensity calibration spots (R1 to R10) may be printed on the membrane (3), as well as four spots (D) in the corners of the membrane for intensity calibration distribution over membrane (3). PCR control spots (P1, P2) are also printed to validate the proper DNA-amplification by means of PCR.

The probes used for the present invention should be suitably chosen for their affinity to the target biological compounds or to the relevant modifications of said target biological compounds suspected to be present in the sample to be analyzed. For example, if the target biological compounds are DNA, the probes can be, but are not limited to, synthetic oligonucleotides, analogues thereof, or specific antibodies. A non-limiting example of a suitable modification of a target biological compound is a biotin substituted target biological compound, in which case the probe may bear an avidin functionality. Following spotting, the probes become immobilized onto the surface of the substrate material (3), either spontaneously due to the substrate (e.g. membrane) inherent or acquired (e.g. via activation) properties, or through an additional physical treatment step (such as, but not limited to, crosslinking, e.g. through drying, heating, a temperature treatment step, or through exposure to a light source, e.g. UV).

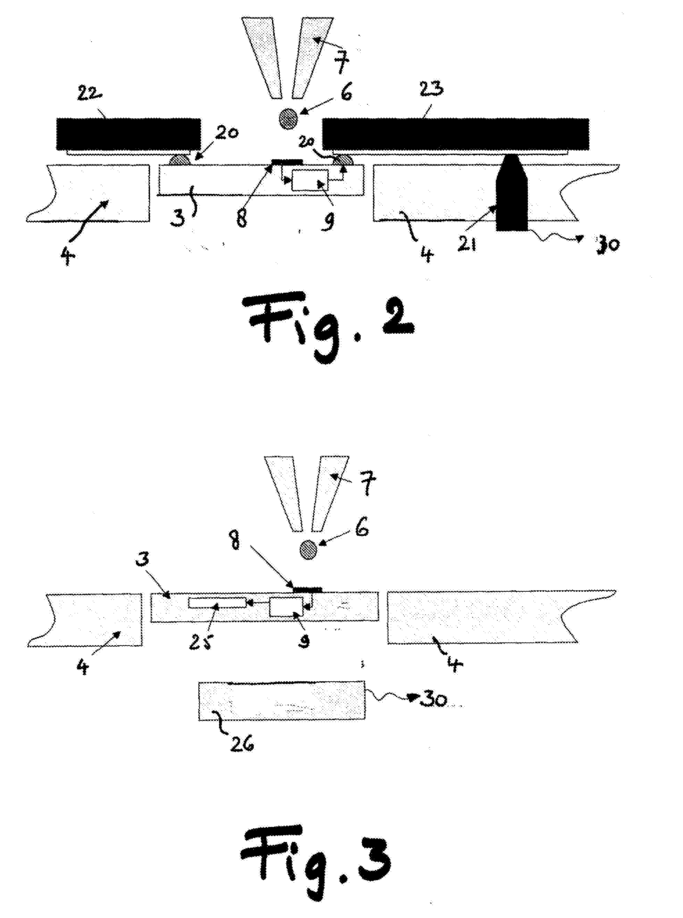

Referring to figure 2, part of a substrate tray (4) is shown. Tray (4) is positioned in an ink et device, of which only a print head (7) is shown. Print head (7) emits a capture probe droplet (6), to be deposited on a biological assay substrate (3) according to the invention. Apart from the usual magnetic (or optical) sensors (not shown) for detecting the presence of the labelled molecules, the substrate (3) comprises verification means in the form of fluid sensor (8), integrated in an electrical circuit with detection electronics (9). Preferably sensor (8) is a combined fluid/label molecule sensor. Sensor (8) detects the landing of droplet (7) onto the sensor (8). In the embodiment shown the substrate (3) interacts with the environment through interaction means in the form of electrical connections (20) and (21). These electrical connections (20, 21) ensure that the fluid sensor signal may be transmitted to signal processing means (30, not shown). The substrate (3) may be attached to a flexible foil (22), provided with suitable wiring (23). Flex foil (22) including sensor chip (3) is placed in a tray (4), which may typically contain up to a few hundred of these foils. Tray (4) is inserted in the ink jet printing device. Each of the tray positions is provided with a few contact pins (21), which connect the fluid sensor to the printer control unit (30, not shown) or to some other back-end processor that further processes the fluid sensor signal.

Referring to Figure 3, another embodiment of the invention is shown. In a wireless embodiment the sensor chip includes a printing detection circuit (9) and interaction means comprising RF transmitter/antenna/electronics (25) to transmit the sensor signal to signal processing means in the form of RF readout means (26). RF readout means connect the fluid sensor to the printer control unit (30, not shown) or to some other back-end processor that further processes the fluid sensor signal. The substrate (3), and in particular the printing verification circuit (9) is in this embodiment powered and readout by the RF field. This embodiment not only avoids problems with electronic contacts (dirt, wear, etc.), but also optionally requires only one RF read-out device (26) for several substrates (3). In a particularly preferred embodiment the RF readout circuitry and antenna (25) may also be used to transmit the actual biosensor signal during actual use of the sensor in the completed cartridge. The biological assay substrate (3) thereto preferably comprises multiplexing means (not shown) in order to be able to detect signals originating from the verification means as well as to detect at least one analyte in a sample fluid.

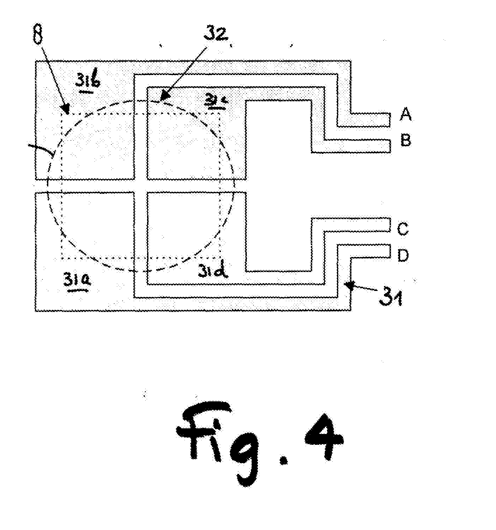

Referring to figure 4, a preferred embodiment is shown of a fluid sensor (8). Sensor (8) is planar and is combined with the biosensor, which may for instance be a magnetic sensor and/or an optical sensor. Sensor (8) is embedded in substrate (3) in the form of an integrated circuit on a silicon substrate. The top-layer of the integrated circuit (3) may comprise a gold layer (31) to facilitate binding of biological materials onto the surface of substrate (3). In another embodiment part of the silicon substrate houses the integrated circuit of the fluid sensor needed for the detection of the landed droplet(s), another part of the silicon substrate is made porous for allowing the fluid with analytes to flow through. In the embodiment shown the gold layer is patterned in several quadrants (31a, 31b, 31 c, 31 d) in order to make different contacts for a capacitive sensor, for instance. Next to the landing the pattern in the form of four quadrants allows to measure the exact position of a capture probe droplet (6) to be deposited on substrate (3). In this way a comparison can be made between the actual droplet position and the intended droplet position (32), shown in figure 4. The measurement for instance involves measuring the capacitance between A-B, B-C, C-D, and D-A. The relative measurement results then indicate the actual position of a droplet (6) on the surface of substrate (3). Other detector configurations giving information about droplet position are however also possible. Instead of capacitances also resistances can be measured.

While the present invention has been illustrated and described with respect to particular embodiments and with reference to certain drawings and foregoing description, such illustration and description are to be considered illustrative or exemplary and not restrictive. The invention is not limited to the described embodiments. Instead, the ink jet printer according to the present invention can be used for any precision placement of droplets onto membranes. Other droplet placement means can be considered as well, such as dip pen spotters. It is particularly suited for the production of biosensors for molecular diagnostics. Diagnostics include rapid and sensitive detection of proteins and nucleic acids in complex biological mixtures, such as blood, urine, intestinal fluids or saliva, for on-site testing and for diagnostics in centralized laboratories. Other applications are in medical (DNA/protein diagnostics for cardiology, infectious disease and oncology), food, and environmental diagnostics.

## Claims

1. A biological assay substrate suitable for detecting at least one analyte in at least one sample fluid, the substrate comprising one or more capture probes able to each specifically bind at least one target analyte, wherein the biological assay substrate further comprises verification means which can detect the state of at least part of the capture probes.

2. A biological assay substrate according to claim 1, wherein the state of the capture probes comprises their absence or presence on the substrate.

3. A biological assay substrate according to claim 1, wherein the state of the capture probes comprises their position on the substrate.

4. A biological assay substrate according to any one of the preceding claims, wherein the verification means comprise a fluid sensor integrated in an electrical circuit, as well as interaction means for transmitting the fluid sensor signal to signal processing means, whereby the fluid sensor is able to interact with a capture probe.

5. A biological assay substrate according to claim 4, wherein the interaction means comprise an electrical connection.

6. A biological assay substrate according to claim 4, wherein the interaction means comprise a RF transmitter and antenna, and the signal processing means comprise RF read-out means.

7. A biological assay substrate according to any one of the preceding claims, wherein the fluid sensor detects the change in impedance and/or capacitance of the electrical circuit.

8. A biological assay substrate according to any one of the preceding claims, wherein the biological assay substrate further comprises multiplexing means in order to be able to detect signals originating from the verification means as well as to detect at least one analyte in a sample fluid.

9. A biological assay substrate according to claim 6, wherein the biological assay substrate further comprises multiplexing means in order to be able to detect signals originating from the verification means as well as to detect at least one analyte in a sample fluid.

10. Ink jet device (10) for producing a biological assay substrate (40) by releasing a plurality of capture probes (23, 23a, 23b) onto the substrate (40), the substrate (40) comprising verification means which can detect the state of at least part of the capture probes, whereby the device (10) further comprises reading means for reading signals which originate from the verification means.

11. Ink jet device according to claim 10, wherein the device further comprises control means for regulating the release of a plurality of capture probes (23, 23a, 23b) onto the substrate (40) on the basis of the reading of the signals originating from the verification means.

12. Ink jet device according to claim 10 or 11, wherein the verification means comprise a fluid sensor integrated in an electrical circuit, as well as interaction means for transmitting the fluid sensor signal to the signal processing means, whereby the fluid sensor is able to interact with a capture probe, and whereby the signal processing means comprise the printer control means.

13. Ink jet device according to any one of claims 10 - 12, wherein the interaction means comprise an electrical connection.

14. Ink jet device according to any one of claims 10 - 12, wherein the interaction means comprise a RF transmitter and antenna, and the signal processing means comprise RF read-out means.

15. Method for producing a biological assay substrate, wherein a plurality of capture probes (23, 23a, 23b) are released onto the substrate (40), and whereby the state of at least part of the capture probes is verified by verification means, present in the substrate.

16. Method according to claim 15, wherein the signals originating from the verification means are read by reading means, which read-out is subsequently used to control the release of a plurality of capture probes (23, 23a, 23b) onto the substrate (40).

17. Method according to claim 15 or 16, wherein the capture probes comprise a biochemical reactant and/or an oligonucleotide, and/or a polypeptide and/or a protein, and/or a cell, and/or (parts of) RNA/PNA/LNA.

18. Method for examining analyte fluids, such as human blood or tissue samples, for the presence of certain bacteria, viruses and/or fungi, wherein the analyte fluid is forced through or over a substrate according to any one of claims 1 - 9.

19. Silicon substrate, parts of which comprise the integrated circuits for detecting the landing position of droplets, and parts of which comprise holes for flow through of a fluid with analytes.
